# EUROPÄISCHE PATENTSCHRIFT

(11) **EP 1 423 761 B1**
(45) Veröffentlichungstag und Bekanntmachung des Hinweises auf die Patenterteilung: **01.12.2004**
(21) Anmeldenummer: 03760604.3
(22) Anmeldetag: 12.06.2003
(51) Int. Cl.: G05D 23/13

(54) **MISCHVENTIL**
MIXER VALVE
MITIGEUR

(30) Priorität: 24.06.2002 DE 10228212
(43) Veröffentlichungstag der Anmeldung: 02.06.2004
(73) Patentinhaber: Grohe Water Technology AG & Co. KG, 58675 Hemer (DE)
(72) Erfinder: LUIG, Frank-Thomas, 58708 Menden (DE); HUCK, Kai, 58300 Wetter (DE)
(86) Internationale Anmeldenummer: PCT/EP2003/006150
(87) Internationale Veröffentlichungsnummer: WO 2004/001517

(56) Entgegenhaltungen:
- EP-A- 0 448 315
- WO-A-02/03159
- DE-A- 2 548 650

## Beschreibung

Die Erfindung betrifft ein Mischventil für Kalt- und Heißwasser mit thermostatischer Regelung der Mischwassertemperatur durch einen von einer Temperaturvorwählvorrichtung positionierten und mit einem rohrförmigen Doppelventilsitzschieber verbundenen Thermostaten, der in einem Gehäuse mit wenigstens je einem Kaltwasserund einem Heißwassereinlass sowie wenigstens mit einem Mischwasserauslass angeordnet ist, wobei die Einlassquerschnitte an den beiden Einströmspalten des Mischventils vom Doppelventilsitzschieber mit seinen beiden Stirnseiten gegensinnig gesteuert sind.

Ein Mischventil dieser Gattung ist aus der EP 0 242 680 A2 bekannt. Bei diesen bekannten Mischventilen kann es unter ungünstigen Umständen zu einer mangelhaften Mischung von Kalt- und Heißwasser vor und im Bereich des Thermostaten kommen. In diesem Fall wird von dem Temperaturfühlbereich des Thermostaten eine von der Mischwassertemperatur abweichende Temperatur erfühlt, so dass es hierbei zu einer Minderung der Regelgüte kommen kann.
Zur Verbesserung der Regelgüte ist es aus der deutschen Auslegeschrift 25 48 650 bereits bekannt, im Fühlbereich des Thermostaten eine zylindrische Führungs- und Ablenkhülse am Gehäuse anzuordnen. Mit dieser Einrichtung wird jedoch lediglich der Heißwasserstrom umgelenkt, um ein vorzeitiges Berühren des Temperaturfühlbereichs zu vermeiden.

Der Erfindung liegt die Aufgabe zugrunde, das im Oberbegriff des Anspruchs 1 angegebene Mischventil zu verbessern.

Diese Aufgabe wird bei einem gattungsgemäßen Mischventil dadurch gelöst, dass der Doppelventilsitzschieber einen ringförmigen Steg hat, an dem eine im Durchmesser kleinere Trennhülse ausgebildet ist, die wenigstens mit ihren beiden Endbereichen axial verschieblich in einer Bohrung aufgenommen ist, und hinter den Einströmquerschnitten einerseits das Kaltwasser und andererseits das Heißwasser separat jeweils wenigstens einer Öffnung zugeführt ist, die im Steg in einem ringförmigen Mischkanal münden, wobei der Mischkanal die Trennhülse radial durchdringt, derart, dass das austretende Mischwasser den Thermostaten gerichtet anströmt.
Weitere Ausgestaltungen der Erfindung sind in den Ansprüchen 2 bis 15 angegeben.

Mit den erfindungsgemäßen Maßnahmen wird insbesondere eine direkte und gerichtete Anströmung des Thermostaten mit gemischtem Heiß- und Kaltwasser bzw. Mischwasser erreicht, wobei die Mischung innerhalb des Mischkanals im Bereich des Doppelventilsitzschiebers erfolgt. Die Position des Mischkanals zum temperaturempfindlichen Bereich des Thermostaten bleibt nach der erfindungsgemäßen Ausbildung auch bei einer Einbringung der axialen Stellgröße oder bei einer axialen Verschiebung des Doppelventilsitzschiebers gleich. Vorteilhaft kann der Mischkanal im Steg des Doppelventilsitzschiebers senkrecht, aber auch geneigt zur Mittelachse des Doppelventilsitzschiebers angeordnet werden.

In weiterer Ausgestaltung der Erfindung kann zweckmäßig hinter dem Einlassquerschnitt für Kaltwasser und dem Einlassquerschnitt für Heißwasser jeweils eine Ringkammer im Bereich des Stegs ausgebildet werden, wobei die Öffnungen des Stegs im Bereich der Ringkammer angeordnet sind. Zur guten Wasserführung kann hierbei in der Ringkammer jeweils am Kopfstück und am Deckel eine Hohlkehle ausgebildet werden.
Die Öffnungen im Steg werden vorteilhaft parallel zur Mittelachse des Doppelventilsitzschiebers angeordnet, wobei die Öffnungen für Kaltwasser und die Öffnungen für Heißwasser zueinander versetzt oder auch koaxial zueinander angeordnet werden können.

In einer weiteren Ausgestaltung der Erfindung kann der Doppelventilsitzschieber mit dem Steg und der Trennhülse einstückig ausgebildet werden. Insbesondere für eine kostengünstige Fertigung kann er aber zweckmäßig zweiteilig ausgebildet werden. Hierbei kann der Doppelventilsitzschieber vorteilhaft mit einer Hälfte des Stegs und einem ersten Teil der Trennhülse einstückig ausgebildet werden, während ein zweiter Teil der Trennhülse mit der anderen Hälfte des Stegs einstückig ausgebildet und im Bereich des Stegs mit der ersten Hälfte verbindbar ist.

Ausführungsbeispiele der Erfindung sind in der Zeichnung dargestellt und werden im Folgenden näher beschrieben. Es zeigt in der Zeichnung
- Figur 1: ein Mischventil mit thermostatischer Regelung in schematischer Darstellung im Längsschnitt;

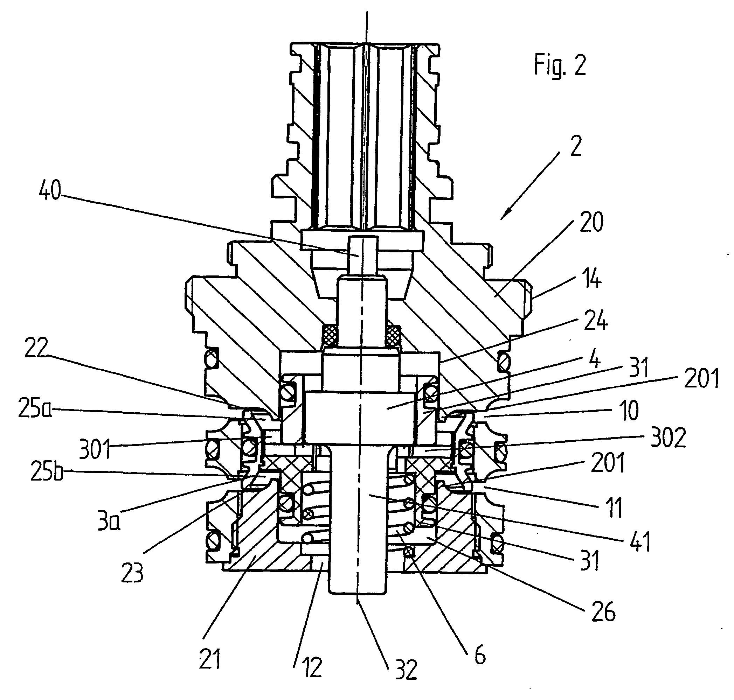

- Figur 2: den in Figur 1 gezeigten Ventileinsatz mit dem Doppelventilsitzschieber und dem Thermostaten als Baueinheit;
- Figur 3: den in Figur 2 gezeigten Doppelventilsitzschieber in vergrößerter Darstellung im Längsschnitt in der Schnittebene III der Figur 4;
- Figur 4: den in Figur 3 gezeigten Doppelventilsitzschieber in Draufsicht;
- Figur 5: einen anderen Ventileinsatz, der als Baueinheit in ein Ventilgehäuse einsetzbar ist, im Längsschnitt;

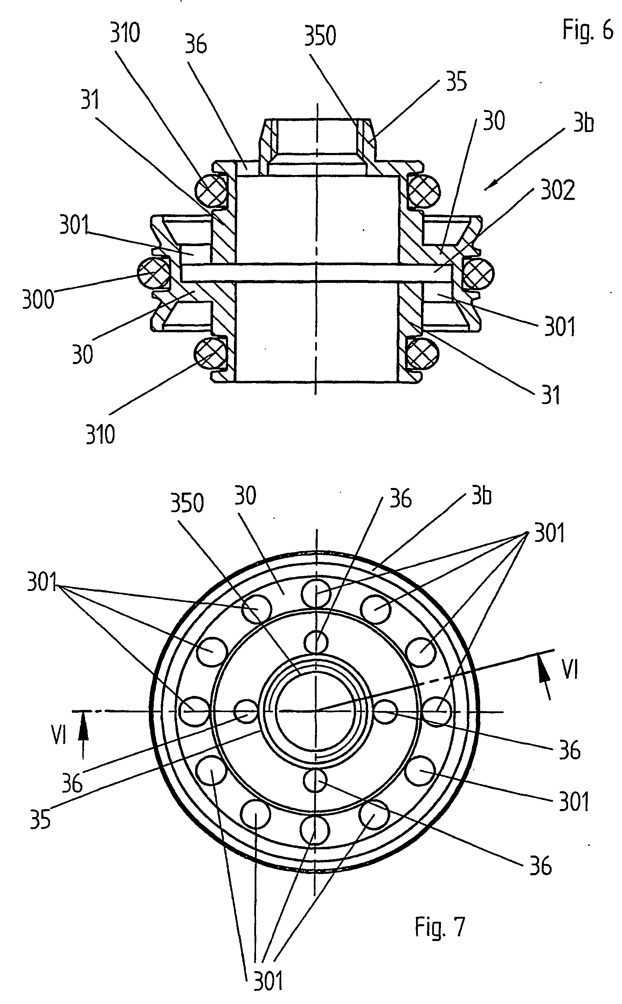

- Figur 6: den in Figur 5 gezeigten Doppelventilsitzschieber in vergrößerter Darstellung im Längsschnitt in der Schnittebene VI der Figur 7;
- Figur 7: den in Figur 6 gezeigten Doppelventilsitzschieber in Draufsicht.

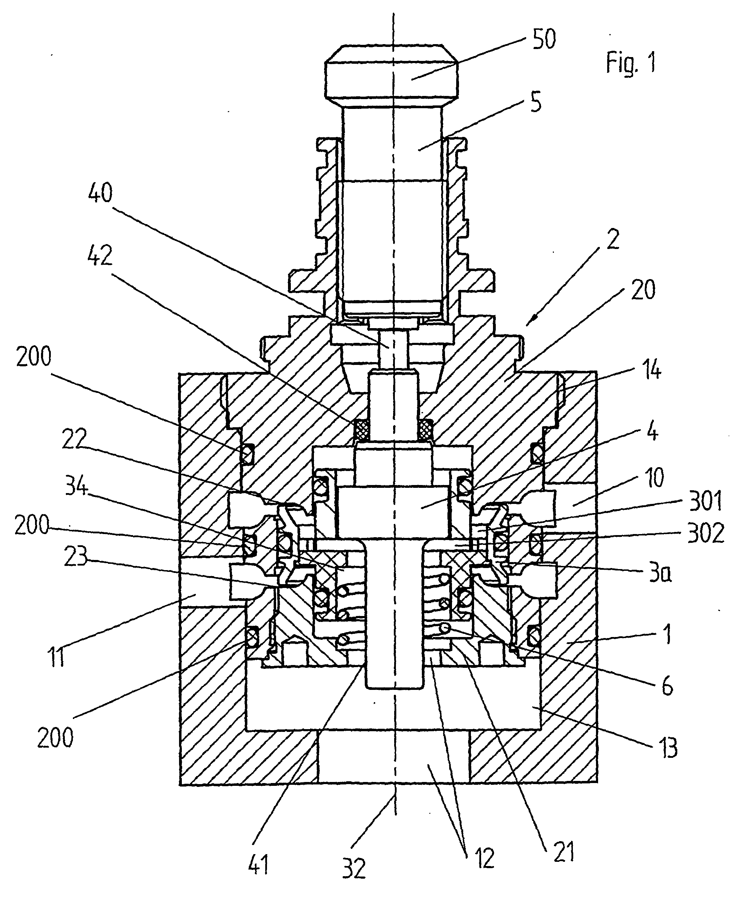

Der Einfachheit halber sind bei den Ausführungsbeispielen in der Zeichnung gleiche oder entsprechende Elemente mit jeweils gleichen Bezugszeichen versehen. Das in Figur 1 der Zeichnung schematisch dargestellte thermostatisch geregelte Mischventil besteht aus einem Gehäuse 1, in dem in einer Bohrung 13 ein Ventileinsatz 2 angeordnet ist. Der Ventileinsatz 2 ist von einem becherförmigen Kopfstück 20 und einem Deckel 21 zu einer Baueinheit ausgebildet. In dem Ventileinsatz 2 ist ein Doppelventilsitzschieber 3a axial begrenzt verschiebbar angeordnet. Koaxial zum Doppelventilsitzschieber 3a ist ein Thermostat 4 vorgesehen, der mit einer Stirnseite axial an drei symmetrisch angeordneten Führungs- und Anschlagnasen 33 des Doppelventilsitzschiebers 3a axial abgestützt ist. An einer inneren Stirnseite des Deckels 21 ist eine Rückstellfeder 6 einerseits und andererseits an einer Schulter 34 des Doppelventilsitzschiebers 3a abgestützt, so dass der Doppelventilsitzschieber 3a den Thermostaten 4 in Richtung auf das Kopfstück 20 drückt. Der Thermostat 4 ist mit einem Dichtring 42 gedichtet aus dem Kopfstück 20 herausgeführt und liegt mit einem in Abhängigkeit von der Mischwassertemperatur axial auslenkbaren Stößel 40 an einer Temperaturvorwählvorrichtung 5 an. Die Temperaturvorwählvorrichtung 5 ist unverdrehbar axial begrenzt verschiebbar in dem Kopfstück 20 angeordnet, wobei am äußeren Endbereich ein Bewegungsgewinde 50 ausgebildet ist. Mit dem Bewegungsgewinde 50 ist ein in der Zeichnung nicht dargestellter, axial am Kopfstück 20 gehaltener Drehgriff mit einer Stellmutter in Eingriff, so dass durch eine Drehbewegung des Stellgriffs die Temperaturvorwählvorrichtung 5 axial zum Kopfstück 20 bewegbar ist. Diese Axialbewegung wird von dem Stößel 40 auf den Thermostaten 4 und den Doppelventilsitzschieber 3a übertragen, so dass hierdurch die Sollwerttemperatur des Mischwassers einstellbar ist.

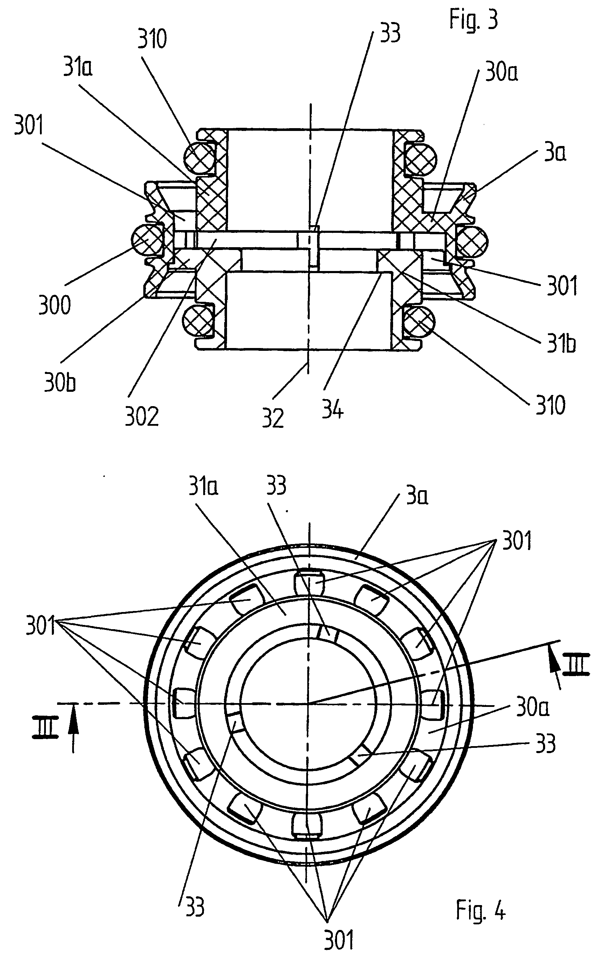

Der Doppelventilsitzschieber 3a ist, wie es insbesondere aus Figur 3 der Zeichnung zu entnehmen ist, zweiteilig ausgebildet. Der Doppelventilsitzschieber 3a ist hierbei mit einem Steg 30a und einem ersten Teil 31a der Trennhülse 31 einstückig ausgebildet. An der Innenwandung des Doppelventilsitzschiebers 3a ist ein Steg 30b, der einstückig mit einem zweiten Teil 31b der Trennhülse 31 ausgebildet ist, eingepresst. Hierbei sind an dem Teil 31b die Führungs- und Anschlagnasen 33 angeformt, so dass zwischen den Stirnseiten der beiden Teile 30a, 31a und 30b und 31b ein Abstand entsteht, in dem der Mischkanal 302 gebildet ist. Anstatt der Pressverbindung können auch andere bekannte Verbindungen oder lösbare Kupplungen eingesetzt werden.
In dem Steg 30a und 30b sind Öffnungen 301 in Form von Langlöchern symmetrisch angeordnet, wie es insbesondere aus Figur 3 und 4 zu entnehmen ist. Die Öffnungen 301 für das Heißwasser sind dabei versetzt angeordnet zu den Öffnungen 301 für das Kaltwasser. Alternativ können auch die Öffnungen für Heißwasser koaxial zu den Öffnungen für Kaltwasser angeordnet werden, wodurch das einströmende Heißwasser und Kaltwasser frontal aufeinander trifft. Zur Trennung des zufließenden Heißwassers vom zufließenden Kaltwasser ist am Außenmantel des Doppelventilsitzschiebers 3a ein O-Ring 300 und an den Endbereichen der Trennhülse 31 jeweils ein O-Ring 310 angeordnet, die jeweils an einer Innenwandung des Kopfstücks 20 oder des Deckels 21 dichtend anliegen.

In dem Gehäuse 1 ist ein Kaltwassereinlass 10 und ein Heißwassereinlass 11 ausgebildet, wobei der Heißwassereinlass 11 über eine Ringkammer mit einem Einlassquerschnitt 23 und der Kaltwassereinlass 10 über eine Ringkammer mit einem Einlassquerschnitt 22 des Mischventils verbunden ist. Zur Abdichtung der Ringkammern für Heißwasser und Kaltwasser sind hierbei im Außenmantel des Ventileinsatzes 2 mit Abstand zueinander angeordnete drei O-Ringe 200 angeordnet, die an der Bohrung 13 des Gehäuses 1 dichtend anliegen. Der Ventileinsatz 2 ist mit einem Gewinde 14 im Gehäuse 1 in der Stecklage gehalten. Hinter dem Einlassquerschnitt 22 für Kaltwasser ist an dem Kopfstück 20 eine Hohlkehle 201 zur Wasserführung in eine Ringkammer 25a ausgebildet, entsprechend ist hinter dem Einlassquerschnitt 23 für Heißwasser am Deckel 21 eine Hohlkehle 201 zur Wasserführung in eine Ringkammer 25b ausgebildet. Der Thermostat 4 ist koaxial zur Mittelachse 32 angeordnet und weist stromabwärts hinter dem Mischkanal 302 einen Temperaturfühlbereich 41 auf, der sich bis zu einem Mischwasserauslass 12 im Deckel 21 und im Gehäuse 1 erstreckt. Der Doppelventilsitzschieber 3a und der erste Teil 31a der Trennhülse 31 ist in einer gestuften Bohrung 24 des Kopfstücks 20 axial begrenzt verschiebbar angeordnet. Der zweite Teil 31b der Trennhülse 31 wird in einer koaxial angeordneten Bohrung 26 des Deckels 21 begrenzt verschieblich geführt.

Das vorstehend beschriebene Mischventil hat folgende Funktionsweise:
Die Mischwassersollwerttemperatur wird mit der Temperaturvorwählvorrichtung 5 durch eine entsprechende Axialverschiebung des Thermostaten 4 mit dem formschlüssig gekoppelten Doppelventilsitzschieber 3a in die Axialposition zur Erzeugung der erforderlichen Einlassquerschnitte 22,23 eingestellt. Das am Kaltwassereinlass 10 einströmende Kaltwasser gelangt hierbei zum Einlassquerschnitt 22 und wird von hier über die Hohlkehle 201 in die Ringkammer 25a eingebracht. So dann tritt es in die parallel zur Mittelachse 32 angeordneten Öffnungen 301 und im Anschluss in den rechtwinklig zu den Öffnungen 301 angeordneten ringförmigen Mischkanal 302 ein. Parallel hierzu gelangt das Heißwasser über den Heißwassereinlass 11 an den Einlassquerschnitt 23 und wird hiernach mit einer Umlenkung von der Hohlkehle 201 in den Ringkanal 25b eingebracht. Das Heißwasser gelangt sodann über die parallel zur Mittelachse 32 angeordneten Öffnungen 301 ebenfalls in den Mischkanal 302 und wird hier insbesondere im Bereich der Umlenkung mit dem Kaltwasser vermischt. Das in dem Mischkanal 302 erzeugte Mischwasser wird radial zur Mittelachse 32 gerichtet an dem stromaufwärts befindlichen Temperaturfühlbereich 41 des Thermostaten angeströmt, so dass eine optimale Erfühlung der Mischwassertemperatur bis zum Ausströmen aus dem Mischwasserauslass 12 erfolgen kann. Alternativ kann der Mischkanal auch geneigt zur Mittelachse angeordnet sein, so dass dann das austretende Mischwasser die Form einer Kegelmantelhülse hat.
Bei Mischwassertemperaturänderungen wird die geänderte Temperatur von dem Temperaturfühlbereich 41 erfasst. Ein in dem Thermostaten 4 angeordneter Dehnstoff wird darauf eine axiale Auslenkung des Stößels 40 verursachen, so dass eine entsprechende axiale Verschiebung des Doppelventilsitzschiebers 3a erfolgt. Die Einlassquerschnitte 22,23 für Kaltwasser und Heißwasser werden hierbei gegenläufig entsprechend verändert, so dass die Istwerttemperatur der Sollwerttemperatur des Mischwassers wieder angenähert wird.

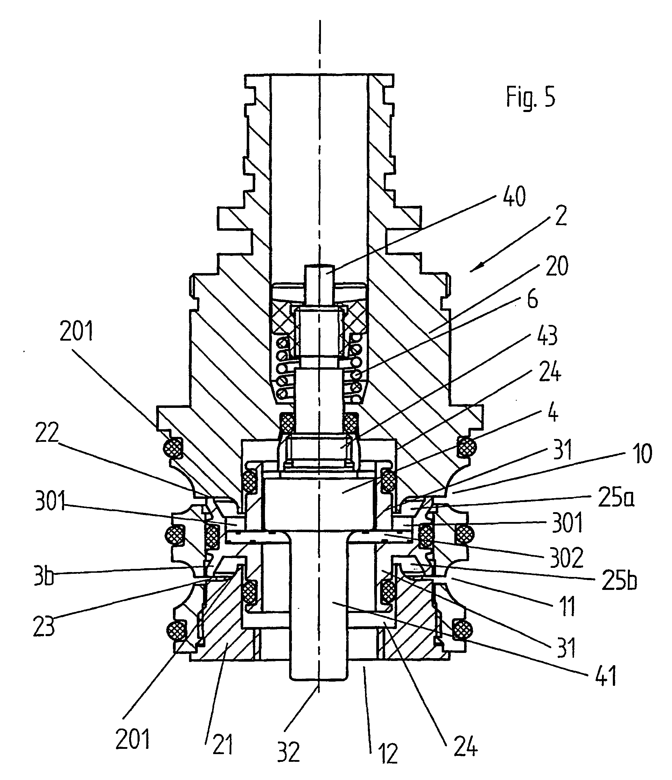

In Figur 5 ist ein abgewandelter Ventileinsatz 2 dargestellt, der ebenfalls in ein Gehäuse (in der Zeichnung nicht dargestellt) einsetzbar ist. Der Ventileinsatz 2 unterscheidet sich zu dem vorstehend beschriebenen Ausführungsbeispiel dadurch, dass die Rückstellfeder 6 außerhalb des vom Wasser beaufschlagten Raumes angeordnet ist und ein Doppelventilsitzschieber 3b vorgesehen ist, der einstückig mit dem Steg 30 und der Trennhülse 31 ausgebildet ist. Außerdem ist der Doppelventilsitzschieber 3b mit einem im Durchmesser verringerten Rohransatz 35 versehen, an dessen Innenseite ein Gewinde 350 ausgebildet ist. Der Thermostat 4 hat hierbei ein Außengewinde 43, mit dem er in das Gewinde 350 des Doppelventilsitzschiebers 3b zur formschlüssigen Verbindung eingeschraubt wird. Außerdem sind im Bereich der Einschnürung am Rohransatz 35 stirnseitig Druckentlastungsbohrungen 36 ausgebildet. Im Übrigen entspricht dieser Ventileinsatz 2 dem vorstehend beschriebenen Ausführungsbeispiel.
Selbstverständlich kann aber auch bei diesem Ausführungsbeispiel der Doppelventilsitzschieber im Bereich des Stegs zweiteilig ausgebildet sein.

## Patentansprüche

1. Mischventil für Kalt- und Heißwasser mit thermostatischer Regelung der Mischwassertemperatur durch einen von einer Temperaturvorwählvorrichtung (5) positionierten, mit einem rohrförmigen Doppelventilsitzschieber (3a,3b) verbundenen Thermostaten (4), der in einem Gehäuse (1) mit wenigstens je einem Kaltwasserund einem Heißwassereinlass (10,11) sowie wenigstens einem Mischwasserauslass (12) angeordnet ist, wobei die Einlassquerschnitte (22,23) an den beiden Einströmspalten des Mischventils vom Doppelventilsitzschieber (3a,3b) mit seinen beiden Stirnseiten gegensinnig gesteuert sind, **dadurch gekennzeichnet, dass** der Doppelventilsitzschieber (3a,3b) einen ringförmigen Steg (30,30a,30b) hat, an dem eine im Durchmesser kleinere Trennhülse (31) ausgebildet ist, die wenigstens mit ihren beiden Endbereichen axial verschieblich in einer Bohrung (24,26) aufgenommen ist, und hinter den Einlassquerschnitten (22,23) einerseits das Kaltwasser und andererseits das Heißwasser separat jeweils wenigstens einer Öffnung (301) zugeführt ist, die im Steg (30,30a,30b) in einem ringförmigen Mischkanal (302) münden, wobei der Mischkanal (302) die Trennhülse (31) radial durchdringt, derart, dass das austretende Mischwasser den Thermostaten (4) gerichtet anströmt.

2. Mischventil nach Anspruch 1, **dadurch gekennzeichnet, dass** der Mischkanal (302) senkrecht zur Mittelachse (32) des Doppelventilsitzschiebers (3) angeordnet ist.

3. Mischventil nach Anspruch 1 oder 2, **dadurch gekennzeichnet, dass** stromabwärts hinter den Einlassquerschnitten (22,23) jeweils eine vom Steg (30,30a,30b) der inneren Seitenwand des Doppelventilsitzschiebers (3a,3b) dem Außenmantel der Trennhülse (31) und einer Stirnseite des Kopfstücks (20) oder des Deckels (21) begrenzte Ringkammer (25a,25b) gebildet ist, die jeweils mit einer oder mehreren Öffnungen (301) verbunden ist oder sind.

4. Mischventil nach Anspruch 3, **dadurch gekennzeichnet, dass** in der Ringkammer (25a,25b) das Kopfstück (20) oder der Deckel (21) mit einer Hohlkehle (201) zur Wasserführung versehen ist.

5. Mischventil nach wenigstens einem der vorhergehenden Ansprüche, **dadurch gekennzeichnet, dass** die Öffnungen (301) parallel zur Mittelachse (32) des Doppelventilsitzschiebers (3a,3b) gerichtet sind.

6. Mischventil nach Anspruch 5, **dadurch gekennzeichnet, dass** die axial gerichteten Öffnungen (301) für Kaltwasser zu den axial gerichteten Öffnungen (301) für Heißwasser versetzt angeordnet sind.

7. Mischventil nach Anspruch 5, **dadurch gekennzeichnet, dass** die axial gerichteten Öffnungen (301) für Kaltwasser und die axial gerichteten Öffnungen (301) für Heißwasser koaxial angeordnet sind, so dass das einströmende Kaltwasser und das Heißwasser frontal aufeinander trifft.

8. Mischventil nach wenigstens einem der vorhergehenden Ansprüche, **dadurch gekennzeichnet, dass** das aus dem Mischkanal (302) austretende Mischwasser auf einen Temperaturfühlbereich (41) des Thermostaten (4) am stromaufwärts gelegenen Ende gerichtet ist.

9. Mischventil nach Anspruch 7, **dadurch gekennzeichnet, dass** als Thermostat (4) ein Dehnstoffelement vorgesehen ist.

10. Mischventil nach wenigstens einem der vorhergehenden Ansprüche, **dadurch gekennzeichnet, dass** die Austrittsrichtung des Mischkanals geneigt zur Mittelachse des Doppelventilsitzschiebers angeordnet ist, so dass das austretende Mischwasser die Form einer Kegelmantelhülse hat.

11. Mischventil nach wenigstens einem der vorhergehenden Ansprüche, **dadurch gekennzeichnet, dass** die Trennhülse (31), der Steg (30) und der Doppelventilsitzschieber (3b) einstückig ausgebildet sind.

12. Mischventil nach wenigstens einem der vorhergehenden Ansprüche, **dadurch gekennzeichnet, dass** am Außenmantel der beiden Endbereiche der Trennhülse (31) und am Außenmantel des Doppelventilsitzschiebers (3) jeweils wenigstens ein O-Ring (300,310) zur Abdichtung vorgesehen ist, so dass ein Querfluss ausgeschlossen ist.

13. Mischventil nach wenigstens einem der vorhergehenden Ansprüche, **dadurch gekennzeichnet, dass** die Trennhülse im Bereich des Stegs aus zwei Teilen zusammenfügbar ist.

14. Mischventil nach wenigstens einem der vorhergehenden Ansprüche, **dadurch gekennzeichnet, dass** der Doppelventilsitzschieber (3a) mit dem Steg (30a) und einem ersten Teil (31a) der Trennhülse einstückig ausgebildet und mit einem Steg (30b), der an einem zweiten Teil (31b) der Trennhülse ausgebildet ist, verbindbar ist.

15. Mischventil nach Anspruch 14, **dadurch gekennzeichnet, dass** die beiden Stege (30a,30b) lösbar mit einer Kupplung verbunden sind.

## Claims

1. Mixer valve for cold and hot water, having thermostatic control of the mixed water temperature by means of a thermostat (4) that is positioned by a temperature-selecting device (5) and is connected to a tubular double valve seat slider (3a,3b), which thermostat (4) is arranged in a housing (1) having at least one cold water inlet and at least one hot water inlet (10,11) as well as at least one mixed water outlet (12), the inlet cross-sections (22,23) at the two inflow openings of the mixer valve being controlled inversely by the two end faces of the double valve seat slider (3a,3b), **characterised in that** the double valve seat slider (3a,3b) has an annular web (30,30a,30b) on which there is formed a separating sleeve (31) of smaller diameter, which separating sleeve is mounted, at least by its two end regions, in a bore (24,26) so as to be axially displaceable, and after the inlet cross-sections (22,23) the cold water, on the one hand, and the hot water, on the other hand, are each guided separately to at least one opening (301) which, in the web (30,30a,30b), opens into an annular mixing conduit (302), the mixing conduit (302) passing radially through the separating sleeve (31) so that the emerging flow of mixed water is directed towards the thermostat (4).

2. Mixer valve according to claim 1, **characterised in that** the mixing conduit (302) is arranged perpendicularly to the central axis (32) of the double valve seat slider (3).

3. Mixer valve according to claim 1 or 2, **characterised in that** there is formed downstream after each of the inlet cross-sections (22,23) an annular chamber (25a,25b) which is defined by the web (30,30a,30b) of the inner side wall of the double valve seat slider (3a,3b), by the outer surface of the separating sleeve (31) and by an end face of the head piece (20) or the cap (21), which chamber(s) is(are) connected to one or more openings (301).

4. Mixer valve according to claim 3, **characterised in that** in the annular chamber (25a,25b), the head piece (20) or the cap (21) is provided with a channel (201) for water guidance.

5. Mixer valve according to at least one of the preceding claims, **characterised in that** the openings (301) are directed parallel to the central axis (32) of the double valve seat slider (3a,3b).

6. Mixer valve according to claim 5, **characterised in that** the axially directed openings (301) for cold water are arranged offset with respect to the axially directed openings (301) for hot water.

7. Mixer valve according to claim 5, **characterised in that** the axially directed openings (301) for cold water and the axially directed openings (301) for hot water are arranged coaxially, so that the inflowing cold water and the hot water meet each other head on.

8. Mixer valve according to at least one of the preceding claims, **characterised in that** the mixed water emerging from the mixing conduit (302) is directed towards a temperature-sensing region (41) of the thermostat (4) at the end located upstream.

9. Mixer valve according to claim 7, **characterised in that** as the thermostat (4) there is provided an element of expandable material.

10. Mixer valve according to at least one of the preceding claims, **characterised in that** the outlet direction of the mixing conduit is arranged inclined with respect to the central axis of the double valve seat slider, so that the emerging mixed water has the shape of a conical envelope.

11. Mixer valve according to at least one of the preceding claims, **characterised in that** the separating sleeve (31), the web (30) and the double valve seat slider (3b) are formed in one piece.

12. Mixer valve according to at least one of the preceding claims, **characterised in that** on the outer surface of the two end regions of the separating sleeve (31) and on the outer surface of the double valve seat slider (3) there is arranged, for sealing, at least one O-ring (300,310), so that transverse flow is excluded.

13. Mixer valve according to at least one of the preceding claims, **characterised in that** the separating sleeve in the region of the web is assembled from two parts.

14. Mixer valve according to at least one of the preceding claims, **characterised in that** the double valve seat slider (3a) is formed in one piece with the web (30a) and with a first part (31a) of the separating sleeve and is connectible to a web (30b) formed on a -second part (31b) of the separating sleeve.

15. Mixer valve according to claim 14, **characterised in that** the two webs (30a,30b) are detachably connected with a coupling.

## Revendications

1. Robinet mitigeur pour eau froide et eau chaude, à régulation thermostatique de la température d'eau mélangée par un thermostat (4) positionné par un dispositif de présélection de température (5) et relié à un tiroir de siège de soupape double tubulaire (3a, 3b), disposé dans un boîtier (1) comportant au moins respectivement une admission d'eau froide et une admission d'eau chaude (10, 11) ainsi qu'au moins une sortie d'eau mélangée (12), les sections transversales d'admission (22, 23) étant commandées à contresens, au niveau des deux fentes d'entrée du robinet mitigeur, par le tiroir de siège de soupape double (3a, 3b) par les deux faces frontales de celui-ci,
**caractérisé en ce que**
le tiroir de siège de soupape double (3a, 3b) présente une nervure annulaire (30, 30a, 30b) sur laquelle est formée une douille de séparation (31) d'un diamètre plus petit, qui au moins par ses deux zones d'extrémité est reçue en déplacement axial dans un alésage (24, 26), et derrière les sections transversales d'admission (22, 23) d'une part l'eau froide et d'autre part l'eau chaude sont amenées séparément respectivement vers une ouverture (301), qui débouche dans la nervure (30, 30a, 30b) dans un canal mélangeur annulaire (302), le canal mélangeur (302) traversant la douille de séparation (31) dans le sens radial, de telle sorte que l'eau mélangée sortante s'écoule ponctuellement en direction du thermostat (4).

2. Robinet mitigeur selon la revendication 1,
**caractérisé en ce que**
le canal mélangeur (302) est disposé verticalement à l'axe central (32) du tiroir de siège de soupape double (3).

3. Robinet mitigeur selon la revendication 1 ou 2,
**caractérisé en ce qu'**
en aval derrière les sections transversales d'admission (22, 23) est formée respectivement une chambre annulaire (25a, 25b) délimitée par la nervure (30, 30a, 30b) de la paroi latérale intérieure du tiroir de siège de soupape double (3a, 3b), l'aire latérale de la douille de séparation (31) et une face frontale de l'élément de tête (20) ou du couvercle (21), et reliée respectivement à une ou plusieurs ouvertures (301).

4. Robinet mitigeur selon la revendication 3,
**caractérisé en ce que**
dans la chambre annulaire (25a, 25b) l'élément de tête (20) ou le couvercle (21) est muni d'une goulotte (201) pour le guidage d'eau.

5. Robinet mitigeur selon au moins l'une des revendications précédentes,
**caractérisé en ce que**
les ouvertures (301) sont orientées parallèlement à l'axe central (32) du tiroir de siège de soupape double (3a, 3b).

6. Robinet mitigeur selon la revendication 5,
**caractérisé en ce que**
les ouvertures (301) orientées axialement pour l'eau froide sont décalées par rapport aux ouvertures (301) orientées axialement pour l'eau chaude.

7. Robinet mitigeur selon la revendication 5,
**caractérisé en ce que**
les ouvertures (301) orientées axialement pour l'eau froide et les ouvertures (301) orientées axialement pour l'eau chaude sont disposées de manière coaxiale de telle sorte que l'eau froide et l'eau chaude entrantes se rencontrent frontalement.

8. Robinet mitigeur selon au moins l'une des revendications précédentes,
**caractérisé en ce que**
l'eau mélangée sortant du canal mélangeur (302) est orientée sur une plage de détection de température (41) de thermostat (4) au niveau de l'extrémité située en amont.

9. Robinet mitigeur selon la revendication 7,
**caractérisé en ce qu'**
un élément en matière expansible est prévu en tant que thermostat (4).

10. Robinet mitigeur selon au moins l'une des revendications précédentes,
**caractérisé en ce que**
la direction de sortie du canal mélangeur est inclinée par rapport à l'axe central du tiroir de siège de soupape double, de telle sorte que l'eau mélangée sortante présente la forme d'une douille avec une surface conique.

11. Robinet mitigeur selon au moins l'une des revendications précédentes,
**caractérisé en ce que**
la douille de séparation (31), la nervure (30) et le tiroir de siège de soupape double (3b) sont formés d'un seul tenant.

12. Robinet mitigeur selon au moins l'une des revendications précédentes,
**caractérisé en ce que**
sur la surface extérieure des deux zones d'extrémité de la douille de séparation (31) et sur la surface extérieure du tiroir de siège de soupape double (3) respectivement au moins un joint torique (300, 310) est prévu pour assurer l'étanchéité, de telle sorte qu'un flux transversal est exclu.

13. Robinet mitigeur selon au moins l'une des revendications précédentes,
**caractérisé en ce que**
dans la zone de la nervure, la douille de séparation peut être assemblée à partir de deux pièces.

14. Robinet mitigeur selon au moins l'une des revendications précédentes,
**caractérisé en ce que**
le tiroir de siège de soupape double (3a) est formé d'un seul tenant avec la nervure (30a) et une première pièce (31a) de la douille de séparation et il peut être relié à une nervure (30b) formée sur une deuxième pièce (31b) de la douille de séparation.

15. Robinet mitigeur selon la revendication 14,
**caractérisé en ce que**
les deux nervures (30a, 30b) sont reliées de manière amovible par un accouplement.
